# EUROPEAN PATENT SPECIFICATION

(11) **EP 1 872 993 B1**
(45) Date of publication and mention of the grant of the patent: **03.03.2010**
(21) Application number: 07011963.1
(22) Date of filing: 19.06.2007
(51) Int. Cl.: B60J 10/10, B60J 10/00

(54) **Draining structure for retractable roof**
Abflussanordnung für ein einziehbares Dach
Structure de drainage pour toit rétractable

(30) Priority: 19.06.2006 JP 2006168275
(43) Date of publication of application: 02.01.2008
(73) Proprietor: Webasto AG, 82131 Stockdorf (DE); Nishikawa Rubber Co., Ltd., Hiroshima-shi, Hiroshima-ken (JP)
(72) Inventor: Yamada, Akio, Higashihiroshima-City 739-0038 (JP); Odoi, Kozo, Higashihiroshima-City 739-0038 (JP); Tsuchida Eiji, Hiroshima 733-8510 (JP); Nishikawa, Shinji, Hiroshima (JP)
(74) Representative: Thoma, Michael

(56) References cited:
- DE-B3- 10 311 652
- DE-U1-202006 002 765
- JP-A- 2003 054 265

## Description

### Technical Field.

This invention relates to a drainage structure for a retractable roof, in particular, it relates to a structure for draining the water that leaks from a junction in the weatherstripping of the roof member.

### Technical Background.

There are known retractable roofs of prior art according to the preamble of claim 1 that have a roof member that moves freely between a closed configuration that covers the vehicle passenger compartment and an open configuration in which the vehicle passenger compartment is open (see Patent Reference #1).

Such a roof member is composed of multiple roof component members, and the roof member in Patent Reference #1 is composed of a front roof panel that covers the top of the vehicle passenger compartment, a rear window (rear panel) that covers the rear of the vehicle passenger compartment, and a middle roof panel that is between the rear window and the front roof panel. Weatherstripping is placed between the roof component members, and between each roof component member and the body, to form a tight seal within the vehicle passenger compartment when the roof member is in the closed configuration, providing protection from wind and rain.

In the retractable roof of Patent Reference #1, middle weatherstripping extends as a seal along the lower edge of the middle roof panel between the middle roof panel and the body or deck panel, and rear weatherstripping extends as a seal along the lower edge of the rear window between the rear window and the body or deck panel. Also, the weatherstripping contains two nearly parallel seal portions along its extent, and a drainage channel that is formed between the two seal portions. A drainage hole is formed in the drainage channel of the middle weatherstripping, and the upstream end of a drainage hose is connected to this drainage hole. The drainage hose is laid out within the vehicle passenger compartment, and its downstream end is connected to a vehicle side drain.

When the roof member is in the closed configuration, the middle and rear weatherstripping that are formed in this way connect to each other to form continuous weatherstripping, and their drainage channels are continuous. Therefore, the middle and rear weatherstripping are formed so that, when the roof member is in the closed configuration, they seal the lower edge of the middle roof panel and the lower edge of the rear window against the body and deck panel, so that the water that enters the weatherstripping is drained through the drainage channel.
Patent Reference #1. Laid-open publication number JP 2003-054265 A.

### Invention Disclosure.

### Problem That the Invention Tries to Solve.

However, the continuous weatherstripping has a divided structure where the middle weatherstripping and rear weatherstripping are joined, so water may leak from the junction of the middle weatherstripping and rear weatherstripping. In particular, as explained above, in a structure in which water is drained through drainage channels in each part of the weatherstripping, the water in the drainage channels must pass the junction, so the leaking of water from the junction is important.

This invention was conceived with this problem in mind, and its purpose is to prevent the leaking of water from the weatherstripping junction.

### Means for Solving the Problems.

This invention provides a water collector on the rear weatherstripping to collect water that leaks at the junction, and provides a drainage guide on the middle weatherstripping to hold water that is collected by the water collector, guiding the water to the vehicle side drain.

In more detail, Part #1 of the invention is a drainage structure for a retractable roof, consisting of a roof member provided so as to be able to move freely between a closed configuration that covers a vehicle passenger compartment and an open configuration in which the vehicle passenger compartment is open, weatherstripping that extends along the edge of the roof member, and a vehicle side drain provided on the side of the vehicle in order to drain water outside the vehicle. The roof member includes a front roof panel that covers the top of the vehicle passenger compartment, a rear panel the covers the rear of the vehicle passenger compartment, and a middle roof panel that is between the rear panel and the front roof panel, and the weatherstripping includes middle weatherstripping that extends along the lower edge of the middle roof panel, and rear weatherstripping that extends along the lower edge of the rear panel, and, when the roof member moves into the closed configuration, the rear weatherstripping meets the middle weatherstripping from below and connects to it, becoming continuous with the middle weatherstripping, and, at the junction of the middle weatherstripping with the rear weatherstripping, there is provided a water collector that has a collector that collects water that leaks from the junction and a drain that drains the water that was collected in the collector, and on the lower edge of the middle roof panel there is provided a drainage guide that is further within the vehicle passenger compartment than the middle weatherstripping, and is located below the drain when the roof member is in the closed configuration, and forms a drainage channel #1 that holds water that drains from the drain and guides it to the vehicle side drain.

With this structure, at the middle and rear weatherstripping that are joined to each other, a water collector is provided at the junction on the rear weatherstripping, which has the lower position, so that it is possible to reliably collect water that leaks from the junction of the middle and rear weatherstripping. And, by providing a drainage guide on the middle roof panel, and laying out the drainage guide to be located below the drain of the water collector, it is possible to reliably pass the water that is collected in the water collector to the drainage guide. In this way, it is possible to reliably prevent water from leaking from the junction of the middle and rear weatherstripping.

It is also possible to conceive of a structure as in Patent Reference #1, where a drainage hose is used to drain the water that is collected in the water collector outside the vehicle, but with such a structure it is necessary to reserve space within the vehicle passenger compartment that contains the roof member so that the drainage hose can bend as it follows along with the opening and closing of the roof member. In other words, in a structure that uses a drainage hose, it is more difficult to lay out the space for the roof member within the vehicle passenger compartment. But, with the present invention, it is possible to implement a structure that prevents water from leaking as the roof member opens and closes, because the water collector moves with the rear panel, while the drainage guide moves with the middle roof panel, and so it is not necessary to have space for a drainage hose to bend as it follows along with the opening and closing of the roof panel, and therefore layout is not adversely affected.

In Part #2 of the invention, the drainage guide of Part #1 of the invention is located along the path of motion of the drain when the roof member moves into the closed configuration, and at least one of the drain guide and drain is formed of an elastic body, and, when the roof member moves into the closed configuration, the member out of the drain guide and drain that is formed of an elastic body deforms elastically, so that the edge of the drain goes past the drain guide to be located above the drainage channel #1.

With this structure, when the roof is in the closed configuration, the drain of the water collector is arranged so as to enter drainage channel #1 of the drainage guide, so that it is possible to reliably pass the water from the drain to drainage channel #1.

Also, with this structure, the drainage guide is located along the path of motion of the drain when the roof member moves into the closed configuration, and at least one of the drainage guide and drain is formed of an elastic body, so that when the roof member moves into the closed configuration the member out of the drain guide and drain that is formed of an elastic body deforms elastically, so that the edge of the drain can go past the drain guide and move above the drainage channel #1. In this way, the rear weatherstripping meets the middle weatherstripping from below, that is, when the roof member moves into the closed configuration the rear panel meets the middle roof panel from below, and the edge of the drain, which moves with the rear panel, moves above drainage channel #1 of the drainage guide, which moves with the middle roof panel, that is, drainage channel #1 can be positioned below the drain, so that the water that drains from the drain can be reliably held in drainage channel #1.

In Part #3 of the invention, a middle drainage channel is formed in the middle weatherstripping of Part #1 or Part #2 of the invention and extends along its length, and a rear drainage channel is formed in the rear weatherstripping and extends along its length, and, when the roof member moves into the closed configuration, the middle drainage channel and rear drainage channel connect to form a continuous drainage channel #2.

With this structure, when the roof member is in the closed configuration, the rear drainage channel and middle drainage channel form a drainage channel #2 in the continuous weatherstripping that is formed from the rear weatherstripping and middle weatherstripping, and it is possible to drain through this drainage channel #2. With this type of structure of draining through a drainage channel #2 that is formed in the weatherstripping, a particular problem is the leaking of water at the junction of the weatherstripping, that is, the junction in drainage channel #2, but by providing the water collector and drainage guide it is possible to reliably prevent the water in drainage channel #2 from leaking from the junction of the rear weatherstripping and middle weatherstripping into the vehicle passenger compartment, making it possible for it to drain from the vehicle side drain.

### Effect of the Invention

According to this invention, a water collector is provided to collect water that leaks from the junction where the rear weatherstripping is joined from below to the middle weatherstripping, and a drainage guide formed on drainage channel #1 on the middle roof panel holds the water that collects from the water collector and guides it to the vehicle side drain, so that it is possible to reliably prevent water from leaking at the junction. A water collector is provided on the rear weatherstripping, and a drainage guide on the middle weatherstripping, so that when the roof member opens and closes the water collector and the drainage guide follow the opening and closing of the rear panel and middle roof panel, respectively, moving independently, so that it is possible to implement a structure that prevents water from leaking from the junction without needing to provide space to allow for the bending of a drainage hose as is necessary with a structure that attaches a drainage hose to the junction, that is, which would adversely affect the laying out of the roof member within the vehicle passenger compartment.

### Best Form for Implementing the Invention.

Next we will use figures to give a detailed explanation of an embodiment of this invention. However, the following explanation of a desirable embodiment is essentially just an example, and it is not the intention to limit this invention to such a purpose or application.

### Simple Explanation of the Figures

- Figure 1.: Side view of a vehicle with a retractable roof of this invention in the operating position.
- Figure 2.: Side view of a vehicle with a retractable roof in the storage position.
- Figure 3.: Side view that shows the link mechanism of a retractable roof in the operating position.
- Figure 4.: Decomposed strabismus view of the link mechanism.
- Figure 5.: Side view showing the link structure of a retractable roof in a position between the operating position and the storage position.
- Figure 6.: Side view showing the link structure of a retractable roof in a position between the operating position and the storage position.
- Figure 7.: Side view that shows the link mechanism of a retractable roof in the storage position.
- Figure 8.: Strabismus view looking diagonally from the rear of the car when the retractable roof is in the operating position.
- Figure 9.: Strabismus view looking diagonally from the rear at the weatherstripping along the lower edge of the rear window and middle roof panel.
- Figure 10.: Cross-section along the line X-X in Figure 9.
- Figure 11.: Enlarged strabismus view of the edge of the lower rear weatherstripping seen from the outside of the vehicle passenger compartment.
- Figure 12.: Cross-section along the line XII-XII in Figure 9.
- Figure 13.: Strabismus view looking from within the vehicle passenger compartment when the retractable roof is in the operating position.
- Figure 14.: Cross-section along the line XIV-XIV in Figure 9.

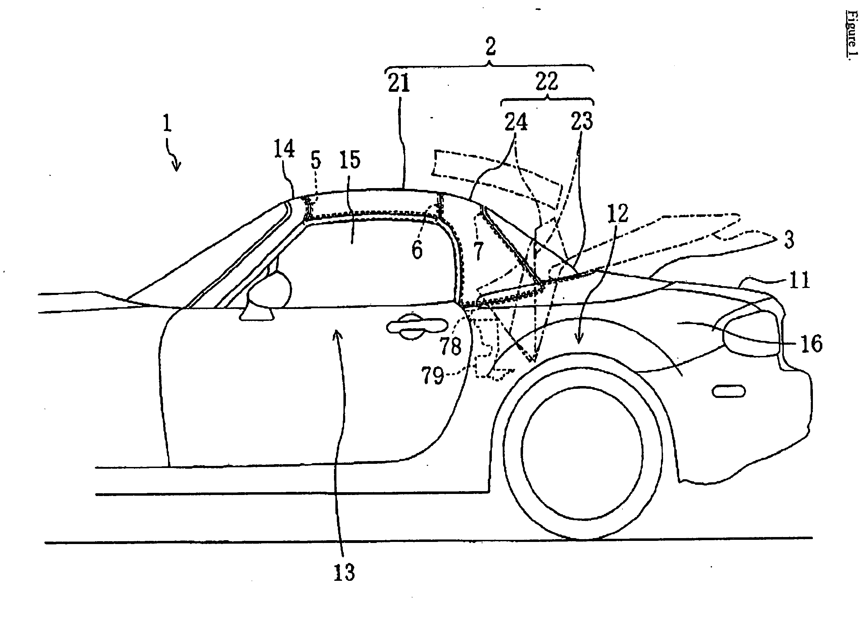

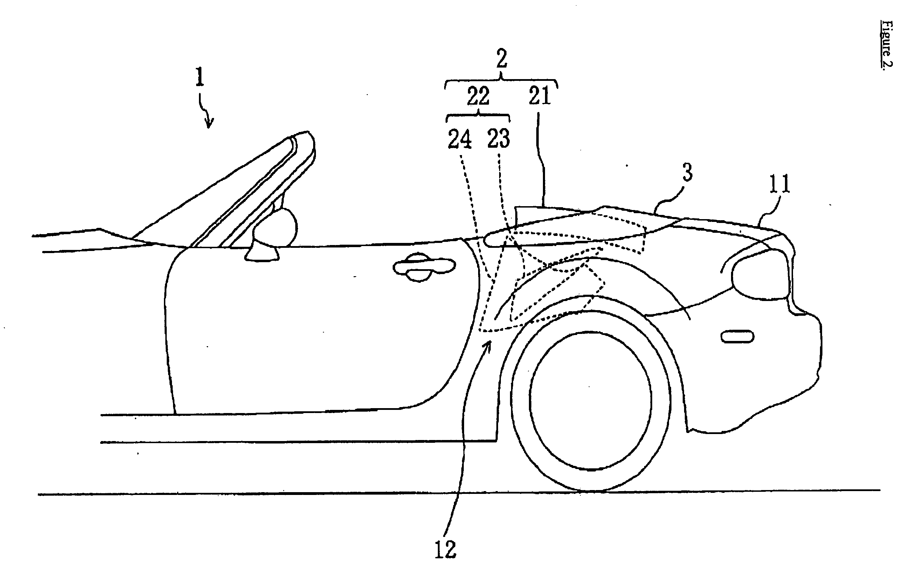

Figures 1 and 2 are representative side views of a vehicle [1] that has a retractable roof of this invention. The retractable roof (roof member) [2] includes a front roof panel [21] that covers the top of the vehicle passenger compartment and a rear roof panel [22] that is located behind the front roof panel [21] and covers the back of the vehicle passenger compartment. The rear roof panel [22] includes a rear window [23] (corresponding to the rear window) made of a transparent material, and a middle roof panel [24] that is located between the front roof panel [21] and rear window [23] and forms the pillars of the vehicle [1].

Trunk space is provided in the rear of the vehicle [1], and its opening is covered by a trunk lid [11] that can be opened and closed. Between the vehicle passenger compartment [13] and the trunk space there is a storage compartment [12] that is open at the top and in which the retractable roof [2] is stored.

A deck lid [3] is provided for the opening at the top of the storage compartment [12]. When the retractable roof [2] is covering the vehicle passenger compartment [13] (so that the roof [2] is in the operating position described later), the deck lid [3] is positioned between the rear edge of the roof [2] and the edge of the opening of the storage compartment [12]. In this way the deck lid [3] covers the opening at the top of the storage compartment [12], which is open at the top at that location.

By using a link mechanism that is not shown in Figures 1 and 2, the retractable roof [2] can change its position between an operating position (see Figure 1) where it covers the vehicle passenger compartment [13], and a storage position (see Figure 2) where it is stored in the storage compartment and the vehicle passenger compartment [13] is open. And, the deck lid [3] uses a link mechanism (not shown), separate from the link mechanism that changes the position of the retractable roof [2], to change its position between an operating position (see Figures 1 and 2) where it covers part of the opening at the top of the storage compartment [12], and a removed position (see the broken line in Figure 1) in which it has moved diagonally upward behind the operating position so that the opening at the top of the storage compartment [12] is open.

Next we will use Figures 1 and 2 to provide a simple explanation of the operation that changes the position of the retractable roof [2], namely, the operation of switching from the state where the retractable roof [2] covers the vehicle passenger compartment [13] to the state where the vehicle passenger compartment [13] is open. First, the deck lid [3] uses its link mechanism to move from the operating position shown by solid lines in Figure 1 to the removed position shown by broken lines, opening the top of the storage compartment [12]. At the same time, the link mechanism of the retractable roof [2] operates, so that the middle roof panel [24] rotates toward the rear around a certain axis of rotation (rotating in the clockwise direction in Figure 1), and the front roof panel [21] slides diagonally upward toward the rear. Also, the rear window [23] moves forward relative to the middle roof panel [24] while moving upward (see the dotted lines in Figure 1).

The dotted lines in Figure 2 show that, as the operation of the link mechanism of the retractable roof [2] continues, the front roof panel [21] and middle roof panel [24] are folded one on top of the other and stored in the storage compartment [12]. At this time the rear window [23] lies on top of the middle roof panel [24], as seen along an axis that extends in the width direction of the vehicle (as seen in Figure 2).

After the retractable roof [2] is stored in the storage compartment [12], the deck lid [3] uses its link mechanism to move from the removed position to the operating position where it covers part of the storage compartment [12] In this way, the vehicle passenger compartment [13] is opened.

The operation of returning the retractable roof [2] from the state where the vehicle passenger compartment [13] is open to the state where it covers the vehicle passenger compartment [13] is the opposite of what was described above.

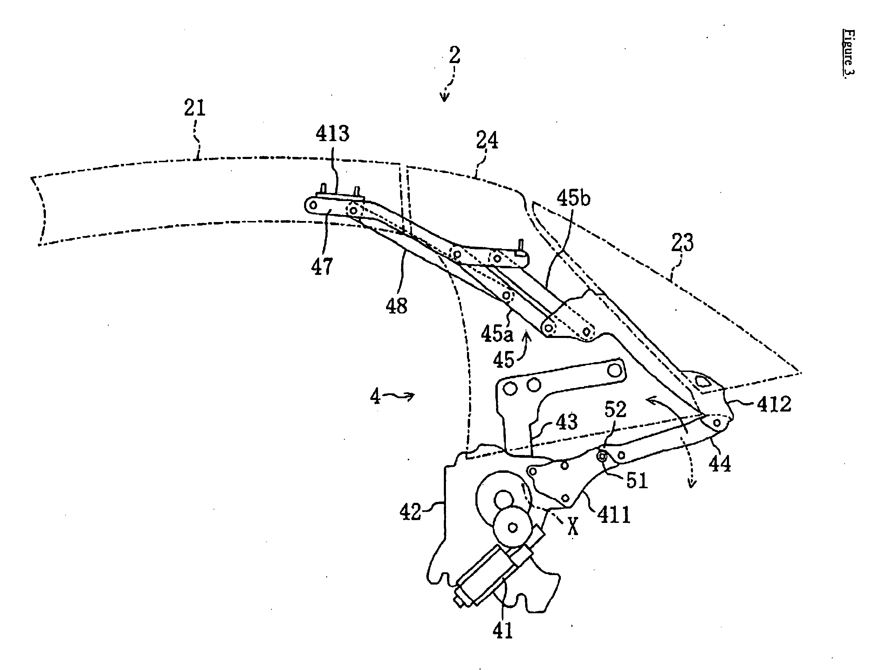

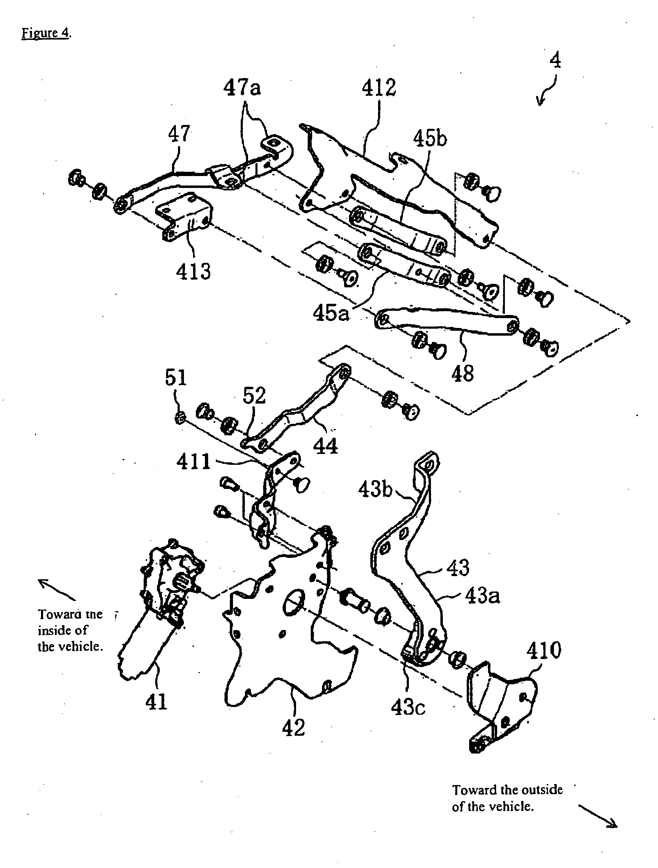

Figures 3 and 4 show the link mechanism [4] of the retractable roof [2]. The link mechanism [4] is inside the retractable roof [2], arranged on both sides in the width direction of the vehicle. Figure 3 is a side view, looking at the link mechanism [4] on the right side of the vehicle from the left side of the vehicle [1], and Figure 4 is a strabismus view that shows the decomposed link mechanism [4] on the left side in the width direction of the vehicle.

The link mechanism [4] is basically connected by a pivoting support to the front roof panel [21] and includes a four-way link composed of links #1 and #2 that are connected by pivoting supports to a member inside the vehicle.

The link mechanism [4] in this embodiment is electrically driven. The drive motor [41] that provides the driving force is fixed by a method such as bolts to a main bracket [42] that is fixed to the vehicle [1]. The main bracket [42] is a shortened plate located within the vehicle passenger compartment [12]. In this way the main bracket [42] is located in a position corresponding to the lower extent of the middle roof panel [24] when the retractable roof [2] is in its operating position.

Attached to the side of the main bracket [42] facing the outside of the vehicle is a lower arm [43]. The lower arm [43] is held between the main bracket [42] and a base plate [410] so that it is possible for it to rotate around an axis of rotation X that extends in the width direction of the vehicle, relative to the main bracket [42].

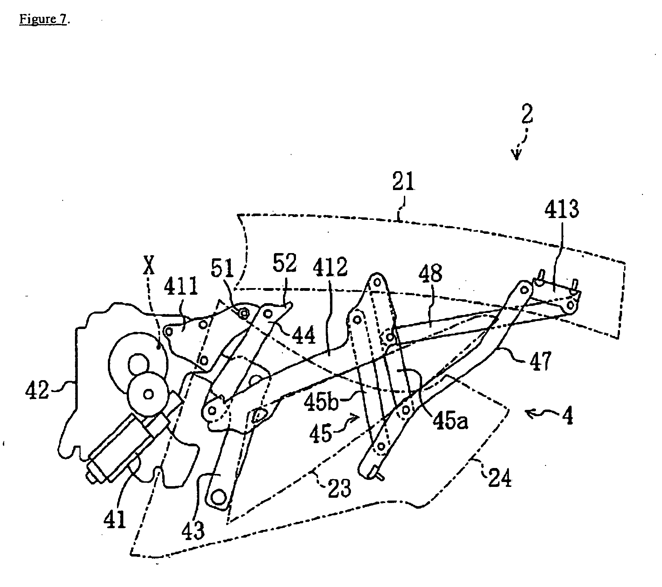

The lower arm [43] has an arm portion [43a] that extends vertically and a fixed portion [43b] that curves around the top of the arm portion [43a] and is fixed to the middle roof panel [24], as will be described later. Also, fixed to the bottom edge portion of the arm portion [43a] is a reduction gear [43c] that meshes with a drive gear that is attached to the drive shaft of the drive motor [41]. In this way, when driven by the drive motor [41], the lower arm [43] rotates around the axis of rotation X, between a position where the arm portion [43a] is upright, as shown in Figure 3, and a position where the arm portion [43a] has moved back, shown in Figure 7.

Also fixed to the main bracket [42] is a window bracket base [411] that extends backward in an upper diagonal direction, from the rear portion near the top of the main bracket [42]. A window link lever [44] is connected by a pivoting support to the rear portion of the window bracket base [411].

Through holes are formed in the front portion and rear portion of the window link lever [44]. A bushing is inserted into the through hole at the front portion of the window link lever [44], and it is fixed to the rear portion of the window bracket base [411] by a method such as a bolt. In this way, the window link lever [44] can rotate around an axis of rotation that extends in the width direction of the vehicle, relative to the window bracket base [411].

Window brackets [412] are fixed at both ends of the rear window [23] in the width direction of the vehicle. The rear portion of each window link lever [44] is attached by a pivoting support to the lower portion of the window bracket [412]. In other words, the window link lever [44] has a bushing inserted into the through hole at its rear portion, and is fixed to the lower portion of the window bracket [412] by a method such as a bolt. In this way, the window link lever [44] rotates with respect to an axis that extends in the width direction of the vehicle around the window bracket [412], or in other words, around the rear window [23].

Two attachment holes are provided at a certain interval in the front and back direction on the upper portion of the window bracket [412], Link levers #1 and #2 [45a, 45b] are connected with pivoting supports at these two attachment holes, respectively.

The link levers #1 and #2 [45a, 45b] have about the same length, and when the retractable roof [2] is in the operating position they each face forward at a raised angle, laid out in the front and back direction of the vehicle. These link levers #1 and #2 [45a, 45b] have through holes in their upper portions and lower portions. The link levers #1 and #2 [45a, 45b] have bushings inserted into the through holes at their lower portions, and are fixed to the upper portion of the window bracket [412] by a method such as a bolt. In this way the link levers #1 and #2 [45a, 45b] rotate with respect to an axis that extends in the width direction of the vehicle relative to the window bracket [412]. That is, the link levers #1 and #2 [45a, 45b] are connected by pivoting supports to the back window [23].

As explained later, an upper arm [47] is fixed to the upper portion of the middle roof panel [24], extending forward toward the front roof panel [21]. The upper portions of the link levers #1 and #2 [45a, 45b] are connected by pivoting supports to the upper arm [47]. That is, the link levers #1 and #2 [45a, 45b] are fixed to the lower portion of the upper arm [47] by the bushings that are inserted into the through holes on their upper portions by a method such as bolts. In this way, the link levers #1 and #2 [45a, 45b] rotate with respect to an axis that extends in the width direction of the vehicle relative to the upper arm [47]. That is, the link levers #1 and #2 [45a, 45b] are connected by pivoting supports to the middle roof panel [24].

In this way the link levers #1 and #2 [45a, 45b] are connected by pivoting supports to the middle roof panel [24] and to the rear window [23]. Therefore, link levers #1 and #2 [45a, 45b] function as a four-way link (the four-way link #2, [45]) that operates between the middle roof panel [24] and rear window [23], and controls the relative motion of the middle roof panel [24] and real window [23].

A front roof bracket [413] is fixed near the back portion of the front roof panel [21]. The front portion of the upper arm [47] is connected by a pivoting support to the front roof bracket [413]. In other words, there is a through hole in the front portion of the upper arm [47], and a bushing is inserted in this through hole on the upper arm [47], to fix it to the front roof bracket [413] by a method such as a bolt. In this way the upper arm [47] rotates with respect to an axis that extends in the width direction of the vehicle relative to the front roof bracket [413]. That is, the upper arm [47] is connected by a pivoting support to the front roof panel [21].

The front roof bracket [413] has another attachment hole, further back from the point of pivoting support (the attachment hole) to the upper arm [47]. This other attachment hole is connected by a pivoting support to the upper part of a control link [48].

When the retractable roof [2] is in the operating position, the control link [48] faces forward at a raised angle. Through holes are formed on the upper portion and lower portion of the control link [48]. And, a bushing is inserted into the through hole in the upper portion of the control link [48], fixing it to the attachment hole of the front roof bracket [413] by a method such as a bolt. In this way the control link [48] rotates with respect to an axis that extends in the width direction of the vehicle relative to the front roof panel [21]. That is, the control link [48] is connected by a pivoting support to the front roof panel [21].

An attachment hole is formed in the central portion of link lever #1 [45a]. The lower portion of the control link [48] is connected by a pivoting support to this attachment hole. In other words, a bushing is inserted into the through hole at the lower portion of the control link [48], and it is fixed to the central portion of link lever #1 [45a] by a method such as a bolt. Therefore, the control link [48] rotates with respect to an axis that extends in the width direction of the vehicle relative to link lever #1 [45a]. That is, the control link [48] is connected by a pivoting support to the four-way link #2 [45].

As explained above, the middle roof panel [24] is connected by a pivoting support to the front roof panel [21] via the upper arm [47], and is also connected by a pivoting support to the main bracket [42] via the lower arm [43]. Therefore, the middle roof panel [24] functions as one link of the pair of links that form the four-way link. Also, since the lower arm [43] is driven by the drive motor [41], this link functions as the driving link of the four-way link.

The other link (the driven link) of the pair of links that form the four-way link is comprised of the window link lever [44], rear window [43] (window bracket [412]), link levers #1 and #2 [45a, 45b], and the control link [48].

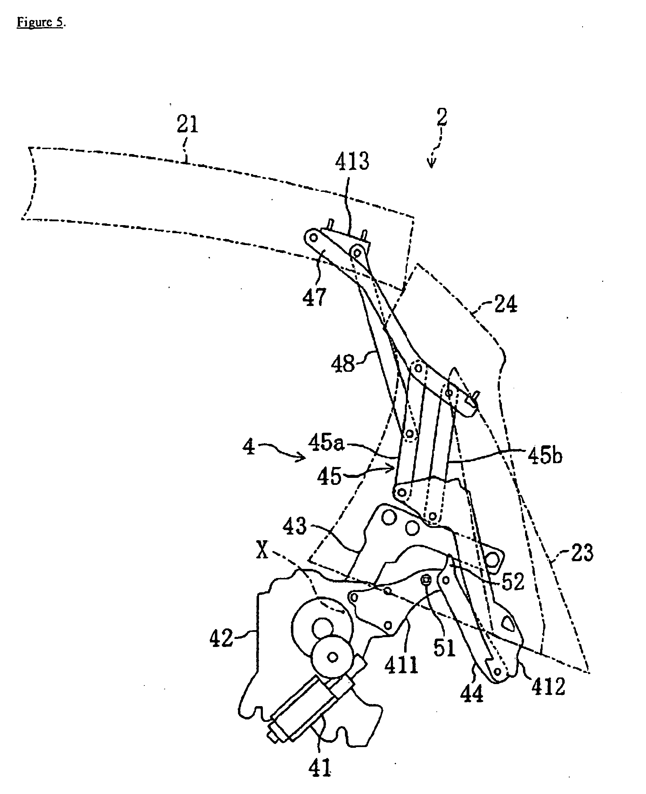

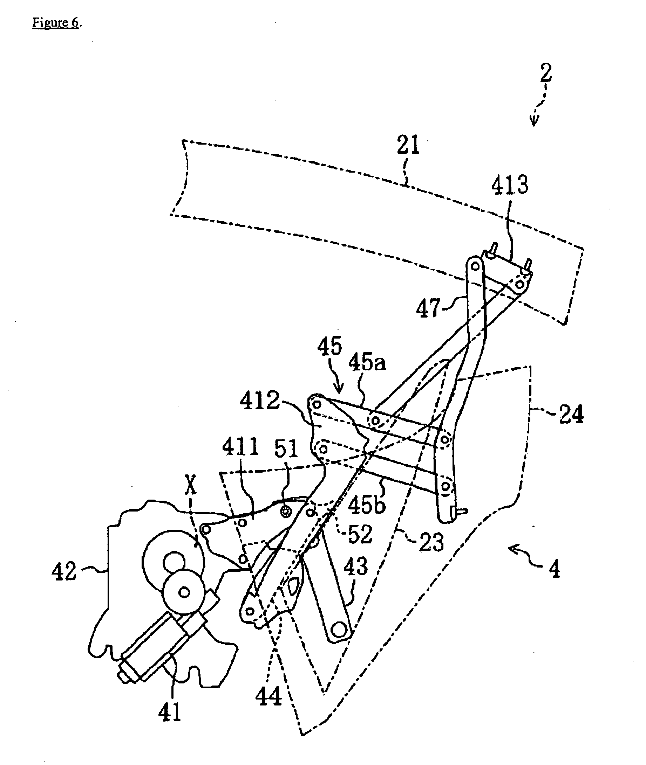

The retractable roof [2] with this structure operates as shown in Figures 3 and 5 through 7 to change its position from the operating position to the storage position. Figure 3 shows the retractable roof [2] when it is in the operating position (the closed configuration), Figure 7 shows the retractable roof [2] when it is in the storage position (the open configuration), Figure 5 shows the retractable roof [2] during the process of changing its position from the operating position to the storage position after it has gone about one-third of the way from the operating position, and Figure 6 shows the retractable roof [2] during the process of changing its position from the operating position to the storage position after it has gone about two-thirds of the way from the operating position.

First, the drive motor [41] begins working, the torque increases due to the reduction gear [43c], and the lower arm [43] begins rotating in the clockwise direction of Figure 3 around the axis of rotation X. Accompanying that rotation, the middle roof panel [24] begins to rotate in the clockwise direction (see Figures 3 and 5).

Accompanying the rotation of the middle roof panel [24], the front roof panel [21], which is connected by a pivoting support to the middle roof panel [24] (upper arm [47]), moves in the opposite way, slanting upward, but the control link [48] is connected by a pivoting support to the front roof panel [21], namely, there is a four-way link between the front roof panel [21] and the main bracket [42], and therefore the front roof panel [21] moves according to a prescribed path.

Also, accompanying the rotation of the middle roof panel [24], there is relative movement between this middle roof panel [24] and the rear window [23] due to the four-way link #2 [45]. In other words, the back window [23] rotates toward the back, while moving forward relative to the middle roof panel [24] that is rotating toward the back.

As the drive motor [41] continues working, the middle roof panel [24] rotates to be roughly on its side (see Figure 6). The front roof panel [21] moves further toward the back and is now located above the middle roof panel [24].

As the drive motor [41] still continues working, the middle roof panel [24] rotates further to the back and is stored in the storage compartment [12] (see Figure 7). At the same time, the front roof panel [21] moves downward so that it is directly above the middle roof panel [24] in the storage compartment [12]. In this way, the front roof panel [21] and middle roof panel [24] are folded one on top of the other. Also, the rear window [23] is folded on the middle roof panel [24] as seen along an axis that extends in the width direction of the vehicle.

The retractable roof [2] changes its position from the storage position to the operating position by a motion opposite to what was described above.

In a retractable roof [2] with this structure, as shown in Figure 1, weatherstripping is provided for the front roof panel [21], middle roof panel [24], and rear window [23]. In more detail, front weatherstripping [5] is provided on the front roof panel [21], from its front edge around its sides, to form a seal with the front header [14] and side windows [15]. Also, middle weatherstripping [6] is provided on the middle roof panel [24], from its front edge to its sides and along its lower edge, to form a seal with the front roof panel [21], side windows [15], and deck lid [3]. And rear weatherstripping [7] is provided on the rear window [23] along its entire perimeter to form a seal with the middle roof panel [24] and deck lid [3]. Furthermore, side weatherstripping [78] is provided on the body of the vehicle [1] where it meets the lower front edge of the middle roof panel [24], to form a seal between the middle roof panel [24] and the body. A drainage hole (not shown in the figure) is formed on the side weatherstripping [78], and a drain cover [79] (corresponding to the vehicle side drain) is provided at the lower position of the side weatherstripping [78] on the side of the rear fender [16] within the vehicle, to catch water that drips from the drainage hole on the side weatherstripping [78] and drain it outside the vehicle.

Next we will give a more detailed explanation of the middle weatherstripping [6] and rear weatherstripping [7].

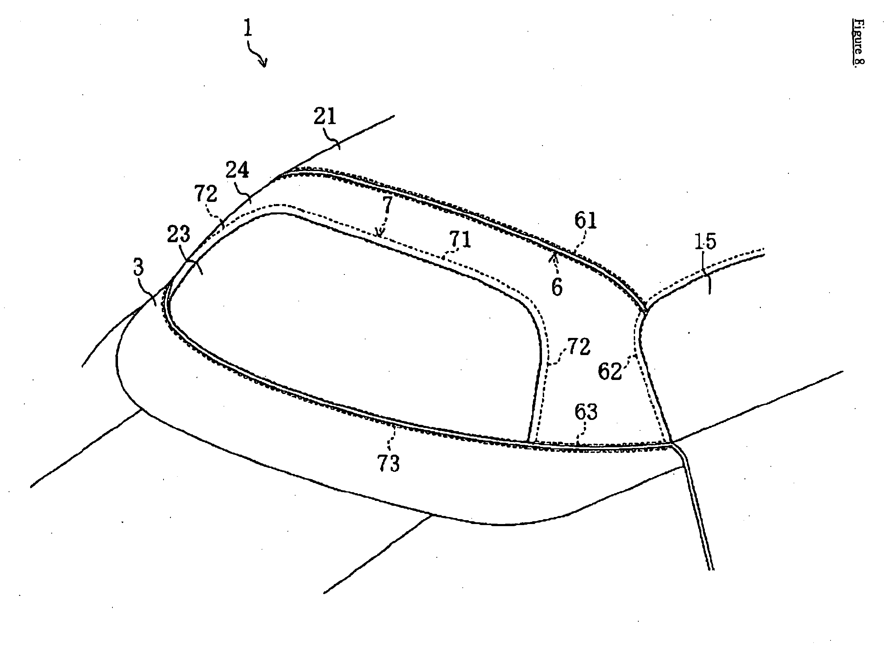

As shown in Figure 8, the middle weatherstripping [6] includes upper middle weatherstripping [61] that forms a seal with the front roof panel [21], side middle weatherstripping [62] that forms a seal with the left and right windows [15] (Figure 8 only shows the right side), and lower middle weatherstripping [63] that forms a seal with the deck lid [3].

The rear weatherstripping [7] includes upper rear weatherstripping [71] and side rear weatherstripping [72, 72] that form a seal with the middle roof panel [24], and lower rear weatherstripping [73] that forms a seal with the deck lid [3].

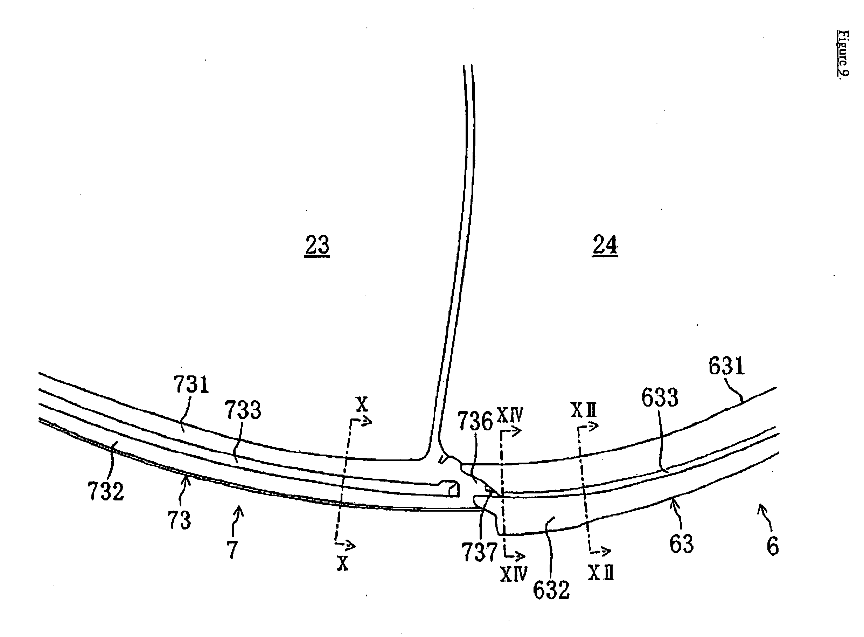

As shown in Figure 9 (the deck lid [3] is omitted), when the retractable roof [2] is in the closed configuration, the lower middle weatherstripping [63] and lower rear weatherstripping [73] are connected to form a continuous lower weatherstripping. When the retractable roof [2] moves into the closed configuration, the rear window [23] moves against the middle roof panel [24] from inside the vehicle passenger compartment to form the closed configuration, so that the lower rear weatherstripping [73] meets the lower middle weatherstripping [63] (Figure 9 only shows the right side) from inside the vehicle passenger compartment, that is, from below.

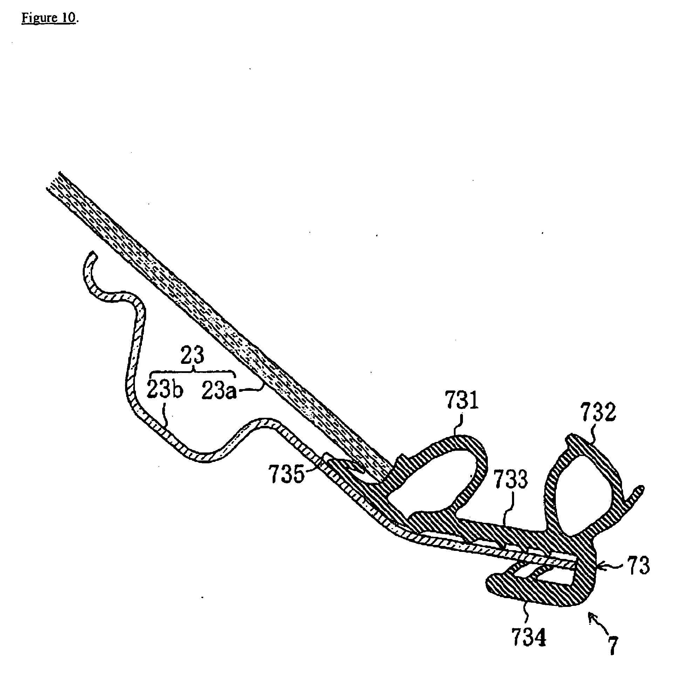

As shown in Figure 10, the rear window [23] has a window member [23a] and a support frame [23b] attached around the edge of the window member [23a], and the lower rear weatherstripping [73] is attached to the lower edge of the support frame [23b]. In more detail, the lower rear weatherstripping [73] has two hollow seal portions [731, 732] that extend in parallel along the lower edge of the support frame [23b], a rear drainage channel [733] that is formed between the seal portions [731, 732], a fold-back portion [734] that extends from the lower edge of the outer seal portion [732] parallel to the bottom of the rear drainage channel [733] folded back on the inside of the support frame [23b], and an extension portion [735] that extends from the lower edge of the inner seal portion [731] inside along the support frame [23b]. The lower rear weatherstripping [73] is formed of a rubber material. And, the lower rear weatherstripping [73] is attached to the surface of the support frame [23b] that is outside the vehicle passenger compartment so that the extension portion [735] is inserted between the window member [23a] and the support frame [23b], and the bottom of the rear drainage channel [733] and the fold-back portion [734] enclose the lower edge of the support frame [23b].

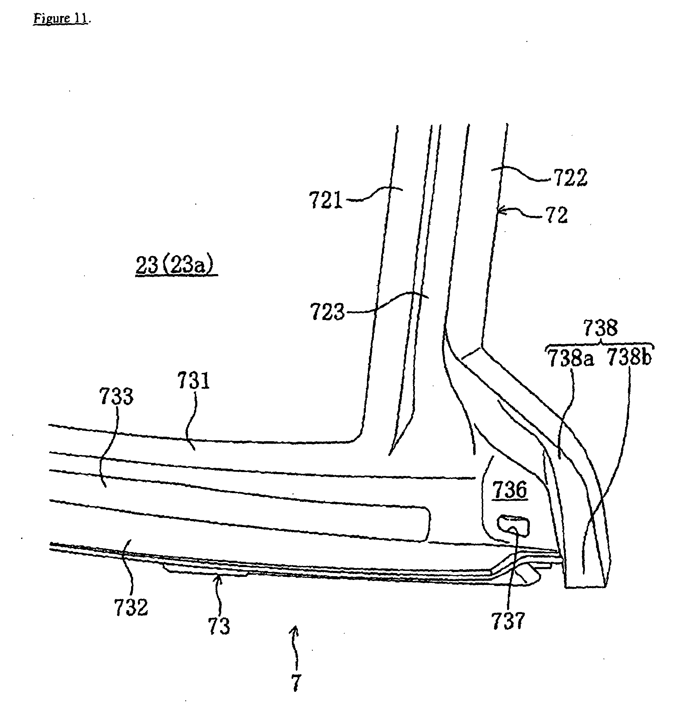

We will explain in more detail the structure of the ends of the lower rear weatherstripping [73]. The left and right ends of the lower rear weatherstripping have the same structure, so we will only explain the right end, making reference to Figure 11. At the end of the lower rear weatherstripping [73] the inner seal portion [731] and outer seal portion [732] are joined above the rear drainage channel [733]. At this junction a contact surface [736] that is connected to the lower middle weatherstripping [63] is formed, and through this contact surface [736] a connecting hole [737] is formed, which connects to the rear drainage channel [733]. The contact surface [736] faces the lower middle weatherstripping [63], and it is an inclined surface that tilts from the outside of the vehicle passenger compartment to the inside.

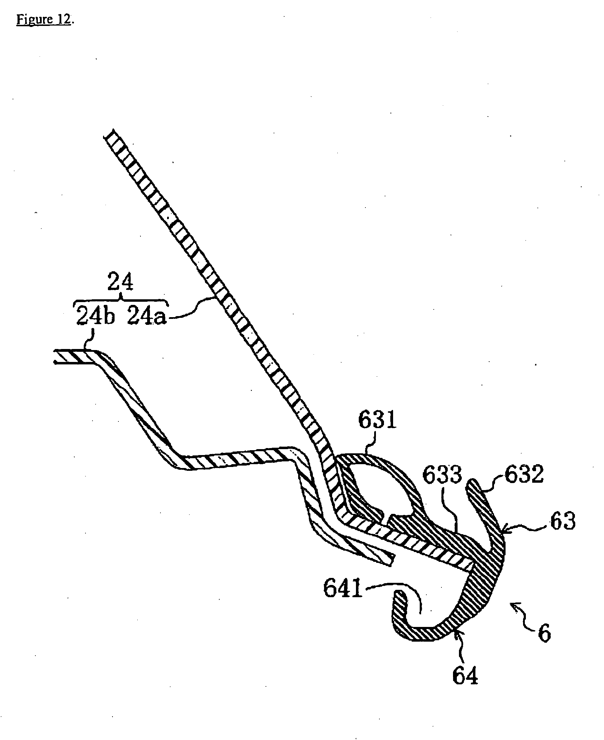

Also, the side rear weatherstripping [72] is continuous with the inner seal portion [731] at the ends of the lower rear weatherstripping [73] (Figure 12 only shows the right side). The side rear weatherstripping [72] has two seal portions [721, 722] that extend in parallel along the side edge of the rear window [23], and a side drainage channel [723] that is formed between the seal portions [721, 722]. Also, although it isn't shown in the figure, the side rear weatherstripping [72] is attached to the rear window [23] by an attachment mechanism similar to that of the lower rear weatherstripping [73]. The lower edge of the side rear weatherstripping [72] is continuous with the inner seal portion [731] of the lower rear weatherstripping [73], and it is formed so that water that flows into the side drainage channel [723] goes past the seal portion [731] of the lower rear weatherstripping [73] and into the rear drainage channel [733].

Also, the lower rear weatherstripping [73] has a water collector [738] that is formed on a portion of the lower middle weatherstripping [63] that is lower than the contact surface [736] and that encloses the contact surface [736]. We will explain in more detail later, but the water collector [738] collects water that leaks from the junction of the lower middle weatherstripping [63] and lower rear weatherstripping [73], draining the collected water to the drainage guide [64] that will be explained later, and it has a collector [738a] that collects water that leaks from the junction and a drain [738a] that drains the water that is collected in the collector [738a]. The collector [738a] extends from the lower edge of the seal portion [722] on the outside of the side rear weatherstripping [72] so as to enclose the lower middle weatherstripping [63] at the contact surface [736], and is formed as a channel that goes lower inside the vehicle passenger compartment than does the contact surface [736]. Also, the drain [738b] has a shape that is continuous with the lower edge of the collector [738a] and protrudes further to the outside.

At the same time, as shown in Figure 12, the middle roof panel [24] has an outer panel [24a] and inner panel [24b], and the lower middle weatherstripping [63] is attached to the lower edge of the outer panel [24a]. In more detail, the lower middle weatherstripping [63] has a hollow seal portion [631] that extends along the lower edge of the outer panel [24a], a lip portion [632] located further to the outside than the seal portion [631] and extending parallel to the seal portion [631], and a middle drainage channel [633] that is formed between the seal portion [631] and the lip portion [632]. The lower middle weatherstripping [63] is formed of a rubber material. The lower middle weatherstripping [63] holds the middle drainage channel [633] against the surface of the lower edge of the outer panel [24a] that is outside the vehicle passenger compartment. Also, as shown in Figure 9, at the end of the lower middle weatherstripping [63] at the rear of the vehicle, that is, at the rear window end, the seal portion [631] and lip portion [632] extend out toward the rear window more than does the bottom of the middle drainage channel [633]. And, when the retractable roof [2] is in the closed configuration, the middle drainage channel [633] connects to the rear drainage channel [733] of the lower rear weatherstripping [73] by means of a through hole [737] to form a continuous side drainage channel (corresponding to drainage channel #2).

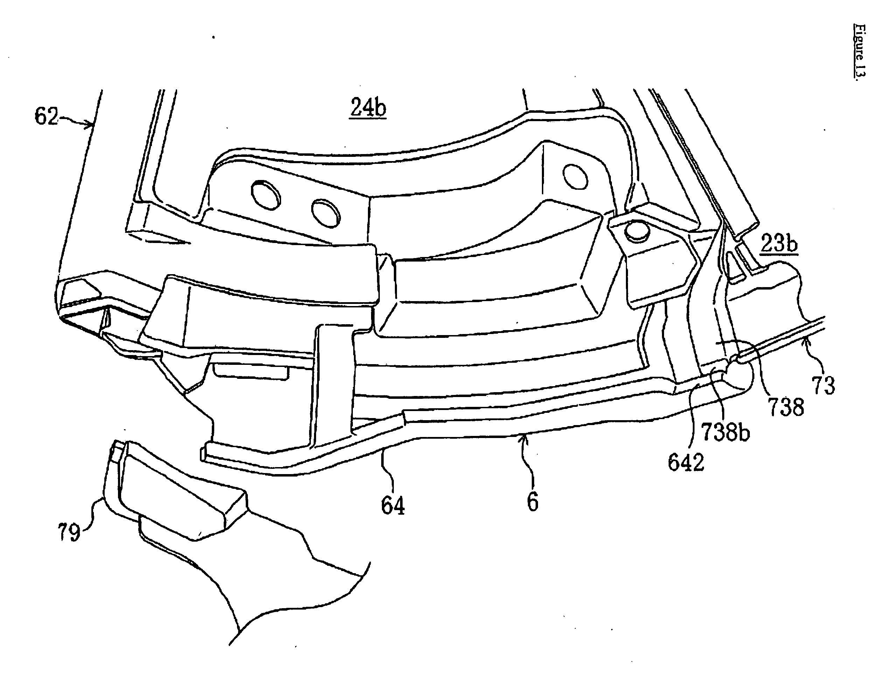

And, as shown in Figures 12 and 13, a drainage guide [64] is formed as a single piece with the lower middle weatherstripping [63]. The drainage guide [64] has a cross-section that is in the shape of a "J", extending downward from the lower edge of the lip portion [632], then bending toward the vehicle passenger compartment, and then bending upward. A internal drainage channel [641] (corresponding to drainage channel #1) is formed within it, open at the top. The drainage guide [64] is formed of a rubber material, similar to the lower middle weatherstripping [63]. The drainage guide [64] with this structure is provided along the lower edge of the middle roof panel [24] on the side of the vehicle passenger compartment, and it slopes downward from the rear portion toward the front portion. And, the front portion of the drainage guide [64] is positioned above a drain cover [79] so that water in the internal drainage channel [641] of the drainage guide [64] is drained from the front portion and drops into the drain cover [79].

Also, when the retractable roof [2] is in the closed configuration, the drain [738b] of the water collector [738] of the lower rear weatherstripping [73] is inside a holder [642] that is formed on the upstream end (rear portion) of the drainage guide [64]. In other words, the drain [738b] is within a holder [642] that is above the internal drainage channel [641], so the water that drains from the drain [738b] flows into the internal drainage channel [641].

With the drainage structure of a retractable roof [2] that is formed in this way, in particular, the drainage structure for the rear portion of the vehicle, water that travels along the surface of the rear window [23], or water that travels along the surface of the middle roof panel [24], flows into the rear drainage channel [733] of the lower rear weatherstripping [73], or the middle drainage channel [633] of the lower middle weatherstripping [63], respectively. And, water in the side drainage channel [723] of the side rear weatherstripping [72] also flows into the rear drainage channel [733]. Then, the water in the rear drainage channel [733] flows from the left and right ends of the rear drainage channel [733] into the middle drainage channels [633] through the connecting holes [737]. The water in the middle drainage channels [633] flows toward the front of the middle drainage channels [633], and then at the front end flows from connecting holes (not shown in the figures) into the internal drainage channel [641] of the drainage guide [64], drops from the internal drainage channel [641] into the drain cover [79], and is drained outside the vehicle through the drain cover [79]. Also, part of the water in the middle drainage channel [633] does not flow into the drainage guide [64] through the connecting holes, but rather overflows the middle drainage guide [633] and travels along the rear fender [16] to be drained outside the vehicle.

At the junction of the lower middle weatherstripping [63] and lower rear weatherstripping [73], it may be that the water in the rear drainage channel [733] cannot flow easily into the middle drainage channel [633], but rather leaks from the junction of the lower middle weatherstripping [63] and lower rear weatherstripping [73]. Water that leaks in this way travels downward along the contact surface [736] of the lower rear weatherstripping [73] that is located under the junction, but the collector [738] is provided around the contact surface [736], so the water that travels along the contact surface [736] is collected in the collector [738a] of the water collector [738]. And, the water that is collected in the collector [738a] is drained from the drain [738b] and flows into the internal drainage channel [641] of the drainage guide [64]. The front edge of the drain [738b] is located above the internal drainage channel [641] of the drainage guide [64], so the water that drains from the drain [738b] flows reliably into the internal drainage channel [641]. The water in the internal drainage channel [641] flows to its front end due to the slope of the internal drainage channel [641] and drops from the front portion of the internal drainage channel [641] into the drain cover [79]. In this way, the water that drains into the drain cover [79] flows through the drain cover [79] and is drained outside the vehicle.

In other words, at the rear of the vehicle with a retractable roof [2], water mainly drains from the vehicle side drainage channels [633, 733] that are formed on the lower rear weatherstripping [73] and lower middle weatherstripping [63], and water that leaks from the junction of the lower rear weatherstripping [73] and lower middle weatherstripping [63] is drained from the water collector [738] and the internal drainage channel [641] of the drainage guide [64].

However, when the retractable roof [2] is in the closed configuration, the drain [738b] of the water collector [738] is inside the holder [642] of the drainage guide [64], located above the internal drainage channel [641]. And, the water collector [738] is provided on the lower rear weatherstripping [73], while the drainage guide [64] is provided on the lower middle weatherstripping [63], so that when the retractable roof [2] goes from the open configuration into the closed configuration the water collector [738] moves toward the drainage guide [64] from below. In other words, when the retractable roof [2] moves into the closed configuration, the drain [738b] of the water collector [738] hits the holder [642] of the drainage guide [64], and if it couldn't go past the holder [642] then it couldn't be located above the internal drainage channel [641].

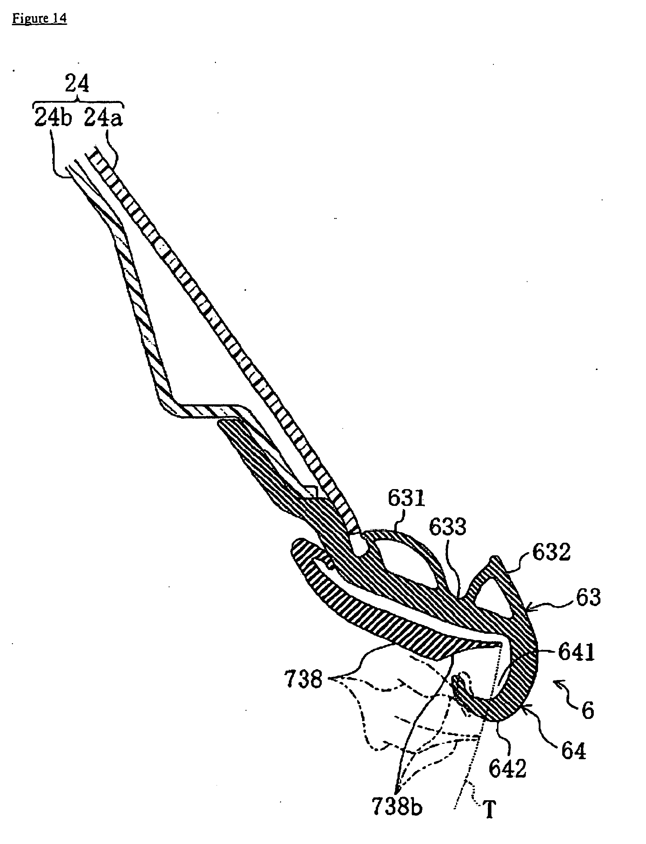

In this embodiment, the drain [738b] of the water collector [738] and the holder [642] of the drainage guide [64] are formed of elastic rubber materials. So, the drain [738b] can go past the holder [642] and be located above the internal drainage channel [641]. In more detail, as shown in Figure 14, the holder [642] of the drainage guide [64] is located along the path of motion T of the drain [738b] when the retractable roof [2] moves into the closed configuration. Therefore, when the retractable roof [2] goes into the closed configuration, that is, when the rear window [23] moves in a slanting upward motion toward the middle roof panel [24], the drain [738b] meets the side of the holder [642] that is inside the vehicle passenger compartment, either from below or from the vehicle passenger compartment side. Then, as the rear window [23] moves further in the direction of the middle roof panel [24] the drain [738b] and the side of the holder [642] that is inside the vehicle passenger compartment mutually deform (see the broken lines within the figure). After that, as the drain [738b] goes past the side of the holder [642] that is inside the vehicle passenger compartment, the drain [738b] and the side of the holder [642] that is inside the vehicle passenger compartment return to their original shapes, and the drain [738b] is located above the internal drainage channel [641] in the holder [642] (see the solid lines in the figure).

Conversely, when the retractable roof [2] changes from the closed configuration to the open configuration, as described above, the drain [738b] and holder [642] elastically deform, so that the drain [738b] goes past the holder [642] and can move below the drainage guide [64].

Therefore, in this embodiment, the lower rear weatherstripping [73] and lower middle weatherstripping [63] join, and there is a structure for draining water from a vehicle side drainage channel that is formed from the rear drainage channel [733] of the lower rear weatherstripping [73] and the middle drainage channel [633] of the lower middle weatherstripping [63], and a water collector [738] is provided at the junction with the lower rear weatherstripping [73], and a drainage guide [64] is provided as a single piece with the lower middle weatherstripping [63] that runs along the lower edge of the middle roof panel [24], so that the water that leaks from the junction of the lower rear weatherstripping [73] and lower middle weatherstripping [63] is collected by the water collector [738], and the water that has been collected is passed to the internal drainage channel [641] of the drainage guide [64], and can be drained from the internal drainage channel [641]. As a result, it is possible to prevent the leakage of water from the weatherstripping junction.

Also, the water that leaks from the weatherstripping junction leaks over the weatherstripping contact surface that is below the junction, but in this embodiment a water collector [738] is provided on the lower rear weatherstripping [73], which is the lower of the lower middle weatherstripping [63] and lower rear weatherstripping [73] at the junction, so that it is possible to reliably collect the water that leaks at the junction.

And, when the retractable roof [2] is in the closed configuration, the drain [738b] of the water collector [738] is located above the internal drainage channel [641] of the drainage guide [64], so that the water that drains from the drain [738b] can be reliably passed to the internal drainage channel [641].

Also, the water collector [738] and the drainage guide [64] are respectively provided on the rear window [23] and on the vehicle passenger compartment side of the middle roof panel, i.e., within the storage compartment [12], and these are respectively provided along the lower edge of the rear window [23] and along the lower edge of the middle roof panel [24], and only a small amount protrudes into the storage compartment [12], so that even when a water collector [738] and drainage guide [64] are provided it is possible to avoid using up the space within the storage compartment [12], which would adversely affect the ability to lay out the inside of the storage compartment [12].

And, with regard to the water collector [738] and drainage guide [64], when the retractable roof [2] is in the closed configuration the drain [738b] is inside the holder [642], forming a continuous drainage path, but when the retractable roof [2] is not in the closed configuration, that is, when the retractable roof [2] is in the open configuration or when it is opening or closing, the water collector [738] moves with the back window [23] while the drainage guide [64] moves with the middle roof panel [24] so that, for example, unlike the case when a drainage hose connects the junction of the lower rear weatherstripping [73] and the drain cover [79], it is not necessary to reserve space for the drainage hose to follow along with the opening or closing motion of the retractable roof [2], and is it possible to avoid having an adverse affect on the ability to lay out the inside of the storage compartment [12].

Also, when the retractable roof [2] goes into the closed configuration, the lower rear weatherstripping [73] meets the lower middle weatherstripping [63] from below, but when the retractable roof [2] is in the closed configuration, the drain [738b] of the water collector [738] provided on the lower rear weatherstripping [73] is above the internal drainage channel [641] of the drainage guide [64] that is provided on the lower middle weatherstripping [63], so that it is necessary for the drain [738b] to go past the drainage guide [64] when the retractable roof [2] goes into the closed configuration. In this embodiment the drain [738b] and the holder [642] of the drainage guide [74] are made of a rubber material so that, as the retractable roof [2] closes, the drain [738b] hits the holder [642] of the drainage guide [64], so that the drain [738b] and the holder [642] elastically transform, and the drain [738b] is able to easily go past the drainage guide [74]. In this way, when the retractable roof [2] is in the closed configuration, even though the lower rear weatherstripping [73] meets the lower middle weatherstripping [63] from below, the drain [738b] can be located above the internal drainage channel [641].

### Other Embodiments

This invention may also take the following forms compared to the above embodiment.

In the above embodiment the water collector [738] was formed in the shape of a channel around the outside of the contact surface [736] of the lower rear weatherstripping [73], but it is not limited to this. For example, it is possible to form a water collector by using a collecting plate that is attached on the inside of the vehicle passenger compartment to the end of the lower rear weatherstripping [73] near the lower middle weatherstripping [63].

Also, in the above embodiment, the drainage guide [64] and lower middle weatherstripping [63] were formed as a single piece, but it is not limited to this. In other words, the drainage guide [64] and lower middle weatherstripping [63] may be formed separately.

And, the drainage guide [64] above is made entirely of rubber, but it is not limited to this. In other words, within the drainage guide [64], the holder [642] that holds the drain [738b] of the water collector [738] must be rubber or some other elastic material, but other parts may be non-elastic. And similarly for the water collector [738], other parts may be formed of non-clastic materials as long as the drain [738b] is formed of an elastic material.

Also, both the drain [738b] and holder [642] are made of elastic materials, but it is possible for just one or the other to be made of an elastic material.

And, in the above embodiment, a rubber material was used as the elastic material, but it is not limited to this. In other words, it is possible to use any type of material, such as a resin or a metal, as long as the material elastically deforms enough for the drain [738b] to go past the drainage guide [64] when the retractable roof [2] moves into the closed configuration.

### Industrial Usability

As explained above, this invention relates to a drainage structure for a retractable roof, in particular, a structure for draining water that leaks from a junction in the weatherstripping of the roof member.

### Explanation of Symbols

- 13: Vehicle passenger compartment.
- 2: Retractable roof (roof member).
- 21: Front roof panel (roof member).
- 23: Rear window (roof member).
- 24: Middle roof panel (roof member).
- 63: Lower middle weatherstripping (middle weatherstripping).
- 633: Middle drainage channel (drainage channel #2).
- 64: Drainage guide.
- 641: Internal drainage channel (drainage channel #1).
- 73: Lower rear weatherstripping (rear weatherstripping).
- 733: Rear drainage channel (drainage channel #2).
- 738: Water collector.
- 738a: Collector.
- 738b: Drain.
- 79: Drain cover (vehicle side drain).

## Claims

1. A vehicle having a drainage structure for a retractable roof, consisting of a roof member (2) provided so as to be able to move freely between a closed configuration that covers a vehicle passenger compartment and an open configuration in which said vehicle passenger compartment is open, weatherstripping that extends along the edge of said roof member, and a vehicle side drain provided on the side of the vehicle in order to drain water outside the vehicle,
wherein said roof member (2) includes a front roof panel (21) that covers the top of said vehicle passenger compartment, a rear panel (23) that covers the rear of said vehicle passenger compartment, and a middle roof panel (24) that is between said rear panel (23) and said front roof panel (21),
and said weatherstripping includes middle weatherstripping (63) that extends along the lower edge of said middle roof panel (24), and rear weatherstripping (73) that extends along the lower edge of said rear panel (23),
and, when said roof member moves into said closed configuration, said rear weatherstripping (73) meets said middle weatherstripping (63) from below and connects to it, becoming continuous with said middle weatherstripping,
**characterized in that**
at the junction of said middle weatherstripping (63) with said rear weatherstripping (73), there is provided a water collector (738) on the rear weatherstripping (73) that has a collector (738a) that collects water that leaks from said junction and a drain (738b) that drains the water that was collected in said collector,
and on the lower edge of said middle roof panel (24) there is provided a drainage guide (64) on the middle weatherstripping (63) that is further within the vehicle passenger compartment than said middle weatherstripping, and is located below said drain (738b) when said roof member is in said closed configuration, and forms a first drainage channel (641) that holds water that drains from said drain and guides it to said vehicle side drain.

2. A vehicle having a drainage structure for a retractable roof as in Claim 1
wherein
said drainage guide (64) is located along the path of motion of said drain (738b) when said roof member moves into said closed configuration,
and at least one of the said drain guide (64) and said drain (738b) is formed of an elastic body,
and, when said roof member moves into said closed configuration, the member out of said drain guide (64) and said drain (738b) that is formed of an elastic body deforms elastically, so that the edge of said drain goes past said drain guide to be located above said first drainage channel (641).

3. A vehicle having a drainage structure for a retractable roof as in Claim 1 or 2 wherein
a middle drainage channel (633) is formed in said middle weatherstripping (63) and extends along its length,
and a rear drainage channel (733) is formed in said rear weatherstripping (73) and extends along its length,
and, when said roof member moves into said closed configuration, said middle drainage channel (633) and said rear drainage channel (733) connect to form a continuous drainage channel.

## Patentansprüche

1. Fahrzeug mit einer Abflussanordnung für ein einziehbares Dach, bestehend aus einem so vorgesehenen Dachelement (2), dass es sich frei zwischen einer geschlossenen Konfiguration, die einen Fahrzeuginnenraum bedeckt, und einer offenen Konfiguration, in der der Fahrzeuginnenraum offen ist, bewegen kann, einem Dichtungsstreifen, der sich entlang der Kante des Dachelements erstreckt, und einem fahrzeugseitigen Abfluss, der an der Seite des Fahrzeugs vorgesehen ist, um Wasser außerhalb des Fahrzeugs abfließen zu lassen,
wobei das Dachelement (2) ein vorderes Dachelement (21), das die Oberseite des Fahrzeuginnenraums bedeckt, ein hinteres Element (23), das die Rückseite des Fahrzeuginnenraums bedeckt, und ein mittleres Dachelement (24), das sich zwischen dem hinteren Element (23) und dem vorderen Dachelement (21) befindet, umfasst,
und wobei der Dichtungsstreifen einen mittleren Dichtungsstreifen (63), der sich entlang der unteren Kante des mittleren Dachelements (24) erstreckt, und einen hinteren Dichtungsstreifen (73), der sich entlang der unteren Kante des hinteren Elements (23) erstreckt, umfasst,
und wobei, wenn sich das Dachelement in die geschlossene Konfiguration bewegt, der hintere Dichtungsstreifen (73) von unten auf den mittleren Dichtungsstreifen (63) trifft und sich mit ihm verbindet, wobei er mit dem mittleren Dichtungsstreifen durchgehend wird,
**dadurch gekennzeichnet, dass**
an der Verbindung des mittleren Dichtungsstreifens (63) mit dem hinteren Dichtungsstreifen (73) ein Wassersammler (738) an dem hinteren Dichtungsstreifen (73) vorgesehen ist, der einen Sammler (738a), der Wasser sammelt, das von der Verbindung leckt, und einen Abfluss (738b), der Wasser abfließen lässt, das in dem Sammler gesammelt wurde, aufweist,
und an der unteren Kante des mittleren Dachelements (24) eine Abflussführung (64) an dem mittleren Dichtungsstreifen (63) vorgesehen ist, die weiter in dem Fahrzeuginnenraum ist als der mittlere Dichtungsstreifen, und sich unter dem Abfluss (738b) befindet, wenn sich das Dachelement in der geschlossenen Konfiguration befindet, und einen ersten Abflusskanal (641) bildet, der Wasser fasst, das von dem Abfluss abfließt, und es zu dem seitlichen Abfluss des Fahrzeugs leitet.

2. Fahrzeug mit einer Abflussanordnung für ein einziehbares Dach nach Anspruch 1, wobei
die Abflussführung (64) entlang des Bewegungswegs des Abflusses (738b) angeordnet ist, wenn sich das Dachelement in die geschlossene Konfiguration bewegt, und mindestens eines von Abflussführung (64) und Abfluss (738b) aus einem elastischen Körper gebildet ist,
und, wenn sich das Dachelement in die geschlossene Konfiguration bewegt, das Element Abflussführung (64) oder Abfluss (738b), das aus einem elastischen Körper gebildet ist, sich elastisch verformt, so dass die Kante des Abflusses an der Abflussführung vorbeigeht, so dass sie über dem ersten Abflusskanal (641) angeordnet ist.

3. Fahrzeug mit einer Abflussanordnung für ein einziehbares Dach nach Anspruch 1 oder 2, wobei
ein mittlerer Abflusskanal (633) in dem mittleren Dichtungsstreifen (63) ausgebildet ist und sich entlang seiner Länge erstreckt,
und ein hinterer Abflusskanal (733) in dem hinteren Dichtungsstreifen (73) ausgebildet ist und sich entlang seiner Länge erstreckt,
und, wenn sich das Dachelement in die geschlossene Konfiguration bewegt, sich der mittlere Abflusskanal (633) und der hintere Abflusskanal (733) verbinden, um einen durchgehenden Abflusskanal auszubilden.

## Revendications

1. Véhicule comportant une structure de drainage pour un toit rétractable, constitué d'un élément de toit (2) réalisé de manière à pouvoir se déplacer librement entre une configuration fermée qui couvre un habitacle de véhicule et une configuration ouverte dans laquelle ledit habitacle de passager est ouvert, d'un calfeutrement qui s'étend le long du bord dudit élément de toit et d'un drain latéral de véhicule réalisé sur le côté du véhicule pour drainer l'eau vers l'extérieur du véhicule,
où ledit élément de toit (2) comporte un panneau de toit avant (21) qui couvre le dessus dudit habitacle de véhicule, un panneau arrière (23) qui couvre l'arrière dudit habitacle de véhicule et un panneau de toit médian (24) qui se situe entre ledit panneau arrière (23) et ledit panneau de toit avant (21),
et ledit calfeutrement comporte un calfeutrement médian (63) qui s'étend le long du bord inférieur dudit panneau de toit médian (24) et un calfeutrement arrière (73) qui s'étend le long du bord inférieur dudit panneau arrière (23), et
lorsque ledit élément de toit se déplace vers ladite configuration fermée, ledit calfeutrement arrière (73) vient en contact avec ledit calfeutrement médian (63) depuis en dessous et se lie à celui-ci, en devenant continu avec ledit calfeutrement médian,
**caractérisé en ce que**
à la jonction dudit calfeutrement médian (63) avec ledit calfeutrement arrière (73), il est réalisé un collecteur d'eau (738) sur le calfeutrement arrière (73) qui possède un collecteur (738a) qui recueille l'eau qui fuit de ladite jonction et un drain (738b) qui draine l'eau qui a été recueillie dans ledit collecteur,
et sur le bord inférieur dudit panneau de toit médian (24), il est prévu un guide de drainage (64) sur le calfeutrement médian (63) qui est plus loin dans l'habitacle de véhicule que ledit calfeutrement médian et se situe entre ledit drain (738b) lorsque ledit élément de toit se trouve dans ladite configuration fermée, et forme un premier canal de drainage (641) qui retient l'eau drainée par ledit drain et la guide vers ledit drain latéral du véhicule.

2. Véhicule comportant une structure de drainage pour un toit rétractable selon la revendication 1, dans lequel
ledit guide de drainage (64) se situe le long du chemin de déglacement dudit drain (738b) lorsque ledit élément de toit se déplace vers ladite configuration fermée, et au moins un parmi ledit guide de drainage (64) et ledit drain (738b) est constitué d'un corps élastique, et
lorsque ledit élément de toit se déplace vers ladite configuration fermée, l'élément parmi ledit guide de drainage (64) et ledit drain (738b) qui est constitué d'un corps élastique se déforme élastiquement de sorte que le bord dudit drain passe au-delà dudit guide de drainage pour se situer au-dessus dudit premier canal de drainage (641).

3. Véhicule comportant une structure de drainage pour un toit rétractable selon la revendication 1 ou 2, dans lequel
un canal de drainage médian (633) est formé dans ledit calfeutrement médian (63) et s'étend sur sa longueur,
et un canal de drainage arrière (733) est formé dans ledit calfeutrement arrière (73) et s'étend sur sa longueur,
et lorsque ledit élément de toit se déplace vers ladite configuration fermée, ledit canal de drainage médian (633) et ledit canal de drainage arrière (733) se rejoignent pour former un canal de drainage continu.
